# EUROPEAN PATENT SPECIFICATION

(11) **EP 2 225 949 B1**
(45) Date of publication and mention of the grant of the patent: **06.11.2013**
(21) Application number: 08752900.4
(22) Date of filing: 16.05.2008
(51) Int. Cl.: A23B 7/02, A23L 1/212

(54) **MOLDED DRY FRUIT FOOD**
GEFORMTES TROCKENFRUCHTNAHRUNGSMITTEL
ALIMENT MOULÉ À BASE DE FRUITS SECS

(30) Priority: 05.12.2007 JP 2007314211
(43) Date of publication of application: 08.09.2010
(73) Proprietor: Otsuka Foods Co., Ltd., Osaka-shi Osaka 540-0021 (JP)
(72) Inventor: KOMATSU, Ichiro, Tokushima-shi Tokushima 771-0183 (JP); DAIMON, Satoshi, Tokushima-shi Tokushima 771-0183 (JP); ETO, Koji, Tokushima-shi Tokushima 771-0183 (JP); TOKUYAMA, Naoto, Tokushima-shi Tokushima 771-0183 (JP)
(74) Representative: Müller-Boré & Partner Patentanwälte
(86) International application number: PCT/JP2008/059071
(87) International publication number: WO 2009/072315

(56) References cited:
- EP-A2- 0 325 478
- JP-A- 60 037 930
- JP-A- 63 304 941
- DATABASE GNPD [Online] Mintel; 1 May 1999 (1999-05-01), Anonymous: "Fun Shapes Pineapple", XP002633697, retrieved from www.gnpd.com Database accession no. 10059678
- DATABASE GNPD [Online] Mintel; 1 June 1999 (1999-06-01), Anonymous: "Fruitlings Dried Fruit", XP002633698, retrieved from www.gnpd.com Database accession no. 10060313
- DATABASE GNPD [Online] Mintel; 1 October 2003 (2003-10-01), Anonymous: "Plum Stick", XP002633699, retrieved from www.gnpd.com Database accession no. 236587
- Jamie Oliver: "Genial Kochen mit Jamie Oliver", 1 January 2004 (2004-01-01), Dorling Kindersley, London, XP002633700, page 76, * page 76 *
- Anonymous: "Energiesnack", , 12 October 2007 (2007-10-12), pages 1-4, XP002633701, Retrieved from the Internet: URL:http://replay.web.archive.org/20071012 214918/http://wandernonline.de/html/Outdoo r/html/energiesnack.html [retrieved on 2011-04-20]
- TANAKA T. ET AL.: 'Hit Shohin o Umidasu Moeru Shudan Zukuri' SOYJOY QUALITY MANAGEMENT vol. 58, no. 6, June 2007, pages 26 - 29

## Description

The present invention relates to a molded dried fruit product.

Dried fruits, which are food products prepared by drying raw fruits or candied fruits under sunlight or in a drying machine to make them preservable, have traditionally been used as preserves.

For example, fruits that have small pieces, such as grapes, are used as raisins by directly drying the individual pieces. Moreover, apple, mango, and other fruits of relatively large size are used after adjusting the size thereof by suitably slicing, chopping, cutting, or the like, followed by drying.

Dried fruits are generally eaten as they are or used as supplementary raw materials for breads, cookies, chocolates, etc. Examples of commercially available dried fruits to be eaten as they are include individually packaged products of a single type of dried fruit or packaged products of several types of dried fruits in mixture. For some such commercial products, the package form is devised for portability. However, commercially available dried fruits are often difficult to eat. For example, fruits having small pieces can be deemed to be difficult to eat because they have to be pinched a little at a time to be brought to the mouth. On the other hand, large, sliced or chopped fruits can be deemed to be difficult to eat because their individual forms after drying are not uniform.

Some foods that are difficult to eat alone are made directly eatable, without limiting the eating occasion. For example, Japanese-style awa-okoshi, which is produced by adding molasses to millet and molding the mixture into a rectangle, etc., allows the millet, which is difficult to eat alone, to be directly eatable, without limiting the eating occasion. It is also desired that dried fruits be in an easy-to-eat form without impairing their flavor.

For example, Patent Documents 1 and 2 listed below relate to dried fruits.
Patent Document 1: Japanese Unexamined Patent Publication No. 1985-37930
Patent Document 2: Japanese Unexamined Patent Publication No. 1986-192243

Described under www://gnpd.com are pineapple cut into fun shapes under the name of "Fun Shapes Pineapple", dried fruit in gem-like shapes under the name of "Fruitlings Dried Fruit" and stick-shaped plums under the name of "Plum Stick". Dried fruit gums are described in "Genial Kochen mit Jamie Oliver", January 1, 2004, Dorling Kindersley, London. Recipes of energy snacks are described under http://replay.web.archive.org/20071012214918/http:// wandernonline.de/html/Outdoor/html/energiesnack.htm, October 12, 2007. EP 0 325 478 A2 describes shaped food of fruit or vegetable and production thereof. JP 63-304941 A describes preparation of vegetable or fruit snack food.

A primary object of the present invention is to provide a molded dried fruit product that has improved eating ease.

As a result of conducting extensive research to achieve the above object, the present inventors found that a specific molded dried fruit product can realize this object, and thus accomplished the present invention.

More specifically, the present invention relates to a molded dried fruit product described below.
Item 1. A molded dried fruit product obtained by bonding small pieces of dried fruit together and molding the result into a desired shape, wherein the dried fruit pieces are heated to make the surfaces thereof adhesive, so that the dried fruit pieces are bonded together by the adhesiveness, wherein the heating is carried out at 70 to 120°C, wherein the form of each piece is at least one of:
1) a cube 5 to 10 mm on a side;
2) a chunk 5 to 10 mm on a side; and
3) a slice 5 to 10 mm on a side and 5 mm or less in thickness, and wherein the heating is carried out in a microwave oven.
Item 2. The molded dried fruit product according to Item 1, wherein the dried fruit is at least one member selected from the group consisting of raisins, pineapples, apples, mangos, papayas, bananas, melons, orange peel, lemon peel, apricots, kumquats, peaches, figs, strawberries, blueberries, cranberries, cherries, and prunes.
Item 3. The molded dried fruit product according to Item 1, which further contains at least one member selected from the group consisting of vegetables, fruits, starches, proteins, edible oils and fats, dietary fiber, vitamins, minerals, acidulants, and flavoring agents.
Item 4. The molded dried fruit product according to Item 1, which is in the form of a block, sheet, or rod.

The following describes the molded dried fruit product of the present invention in detail.

### Molded Dried Fruit Product

The molded dried fruit product of the present invention can be obtained by bonding small pieces of dried fruit together, and forming the result into a desired shape.

Dried fruits to be used as starting materials are not limited, and include raisins, pineapples, apples, mangos, papayas, bananas, melons, orange peel, lemon peel, apricots, kumquats, peaches, figs, strawberries, blueberries, cranberries, cherries, prunes, etc. Various commercially available dried fruits can be used, and those produced by directly drying raw fruits, or those produced by drying candied fruits may be used.

The form of the small pieces of dried fruits is at least one of the following: 1) cubes 5 to 10 mm on a side, 2) chunks 5 to 10 mm on a side, and 3) slices 5 to 10 mm on a side and 5 mm or less in thickness. When using raisins or other small-sized dried fruits that naturally have a form equivalent to the above-described small pieces, they can be used as small pieces without processing.

In addition to the dried fruit pieces, the molded dried fruit product may contain additives. For example, the molded dried fruit product may contain one or more of vegetables, fruits, starches, proteins, edible oils and fats, dietary fiber, vitamins, minerals, acidulants, flavoring agents, and the like. These additives may suitably be used for the purpose of improving the flavor, texture, nutritional value, and other properties of the molded dried fruit product.

The form of the molded dried fruit product is not limited as long as it is suitable for eating. For example, the food may be in the form of a block, sheet, or rod. The size of such a block, sheet, or rod is not limited as long as it is easily handled as a food product.

### Method of Producing a Molded Dried Fruit Product

The method of producing the molded dried fruit product of the present invention is not limited. The dried fruit pieces are bonded together in the following manner: the dried fruit pieces are heated to make their surfaces adhesive, so that the pieces are bonded together by the adhesiveness. The following describes an embodiment using this method. The type and size of dried fruit, the type of additives, the form of the molded product, etc., that can be applied to this method are the same as described above.

### An embodiment that uses heating

In Embodiment 1, dried fruit pieces are heated to make their surfaces adhesive, so that the pieces are bonded together by the adhesiveness.

First, the dried fruit pieces are mixed together using, for example, a rotation type stirrer, a rotation/revolution type stirrer, a revolving pan, or the like. In this process, it is preferable to stir the dried fruit pieces at a low speed so that they are not crushed. A suitable stirring time is about 5 to 15 minutes. Additives, when used, are simultaneously stirred with the pieces.

The mixture of pieces is then heated. The heating temperature is not limited as long as the surface of the pieces is made sufficiently adhesive for bonding. Although the temperature varies depending on the type of dried fruit and its sugar content, the mixture is heated to 70 to 120°C (preferably 80 to 110°C). At heating temperatures below 70°C, sufficient adhesiveness may not be obtained because of insufficient heating. At heating temperatures above 120°C, the surfaces of the pieces may be discolored, although the adhesiveness of the surface will increase. The heating time, which varies depending on the type of dried fruit, is, for example, preferably about 1 to 10 minutes, and more preferably about 2 to 5 minutes, at a temperature within the above range.

The heated mixture is then molded into a desired form. It is preferable to place the mixture in a mold while maintaining the mixture temperature that was reached during the heating process. A mold in the form of a box or the like may be used. In terms of operability, a suitable mold form is a box having a length of about 10 cm x 10 cm to 50 cm x 50 cm and a height of about 5 mm to 20 mm. After placing the mixture in the mold, the mixture is rolled using a mill roller or rolling pin so that the mixture is uniformly dispersed in the mold and the height of the mixture is the same as the height of the mold, while maintaining the mixture temperature that was reached during the heating process.

In this embodiment, the mixture of dried fruit pieces is molded after heating; however, it also may be heated after molding. For example, using a cylindrical mold, the mixture of pieces may be placed in the mold and heated, mold and all, to the prescribed temperature, described above, in a water bath, microwave oven, or the like. The mixture may be placed in the cylindrical mold using, for example, a screw feeder. In terms of heating efficiency, the cylindrical mold preferably has a cross section in the form of a circle 15 mm to 25 mm in diameter or an oval 15 mm to 30 mm in the longer diameter.

After heating and molding, the molded body is cooled until the temperature thereof reaches 20 to 50°C. After cooling, the mold is removed, and the molded body is cut into a desired shape, if necessary. For example, the molded body is cut into a desired shape and size using a round-bladed cutter, a guillotine cutter, or the like to obtain a desired molded product.

The molded dried fruit product of the present invention is prepared by bonding dried fruit pieces together by heating. Such a molded product has a novel form that conventional dried fruits do not have, and is easily eaten regardless of the type of dried fruit.

In addition to dried fruits, the molded dried fruit product of the present invention may further contain one or more of vegetables, fruits, starches, proteins, edible oils and fats, dietary fiber, vitamins, acidulants, minerals, flavoring agents, and the like. The addition of these additives helps to further improve the flavor, texture, and nutritive value.

The present invention is described in detail below with reference to examples, although the invention is not limited thereto.

### Example 1

Equal amounts of small pieces of dried pineapple, dried apple, and dried papaya were prepared. The pieces were in the form of cubes 5 to 10 mm on a side. A mixture of pieces was mixed with a heating stirrer. The mixture was stirred while heating for 10 minutes until the temperature of the mixture reached 90°C.

While maintaining the above temperature, the mixture was placed in a 10 cm x 10 cm x 1 cm mold. Then, using a rolling pin, the mixture was uniformly dispersed in the mold and rolled so that the height of the mixture was the same as the height of the mold. After cooling the mixture to 25°C, the mold was removed, and the mixture was cut into a block with a cutter. A molded dried fruit product was thus obtained.

### Example 2

Equal amounts of small pieces of dried pineapple, dried apple, and dried papaya were prepared. The pieces were in the form of cubes 5 to 10 mm on a side. A mixture of pieces was mixed with a stirrer and then placed in a 20-mm-diameter cylindrical mold made of resin.

The mixture was then heated, mold and all, in a microwave oven at 600 W for 20 seconds until the temperature of the mixture reached 90°C. After cooling the mixture to 25°C, the mold was removed, and the mixture was cut into a block using a cutter. A molded dried fruit product was thus obtained.

## Claims

1. A molded dried fruit product obtained by bonding small pieces of dried fruit together and molding the result into a desired shape,
wherein the dried fruit pieces are heated to make the surfaces thereof adhesive, so that the dried fruit pieces are bonded together by the adhesiveness,
wherein the heating is carried out at 70 to 120 °C, wherein the form of each piece is at least one of:
1) a cube 5 to 10 mm on a side;
2) a chunk 5 to 10 mm on a side; and
3) a slice 5 to 10 mm on a side and 5 mm or less in thickness, and wherein the heating is carried out in a microwave oven.

2. The molded dried fruit product according to claim 1, wherein the dried fruit is at least one member selected from the group consisting of raisins, pineapples, apples, mangos, papayas, bananas, melons, orange peel, lemon peel, apricots, kumquats, peaches, figs, strawberries, blueberries, cranberries, cherries, and prunes.

3. The molded dried fruit product according to claim 1, which further contains at least one member selected from the group consisting of vegetables, fruits, starches, proteins, edible oils and fats, dietary fiber, vitamins, minerals, acidulants, and flavoring agents.

4. The molded dried fruit product according to claim 1, which is in the form of a block, sheet, or rod.

## Patentansprüche

1. Geformtes Trockenfruchtprodukt, erhalten durch das Zusammenkleben kleiner Stücke von Trockenfrüchten und das Formen des Ergebnisses in eine gewünschte Form,
wobei die Trockenfruchtstücke erwärmt werden, um deren Oberflächen haftend zu machen, damit die Trockenfruchtstücke durch die Hafteigenschaft aneinanderkleben,
wobei das Erwärmen bei 70 bis 120°C ausgeführt wird, wobei die Form jedes Stücks mindestens eines von
1) einem Würfel mit 5 bis 10 mm an einer Seite,
2) einem Stück mit 5 bis 10 mm an einer Seite und
3) einer Schnitte mit 5 bis 10 mm an einer Seite und mit einer Dicke von 5 mm oder weniger, ist, und wobei das Erwärmen in einem Mikrowellenofen ausgeführt wird.

2. Geformtes Trockenfruchtprodukt nach Anspruch 1, wobei die Trockenfrucht mindestens ein Vertreter, ausgewählt aus der Gruppe, bestehend aus Rosinen, Ananas, Äpfeln, Mangos, Papayas, Bananen, Melonen, Orangenschalen, Zitronenschalen, Aprikosen, Kumquats, Pfirsichen, Feigen, Erdbeeren, Heidelbeeren, Moosbeeren, Kirschen und Pflaumen, ist.

3. Geformtes Trockenfruchtprodukt nach Anspruch 1, welches weiter mindestens einen Vertreter, ausgewählt aus der Gruppe, bestehend aus Gemüse, Früchten, Stärken, Proteinen, essbaren Ölen und Fetten, Ballaststoffen, Vitaminen, Mineralien, Säuerungsmitteln und Aromastoffen, enthält.

4. Geformtes Trockenfruchtprodukt nach Anspruch 1, welches die Form eines Blocks, Blatts oder Stabs aufweist.

## Revendications

1. Produit moulé à base de fruits secs obtenu par liaison ensemble de petits morceaux de fruits secs et moulage du produit obtenu en une forme souhaitée,
dans lequel les morceaux de fruits secs sont chauffés pour rendre les surfaces de ceux-ci adhésives de sorte que les morceaux de fruits secs soient liés ensemble par adhésivité, le chauffage étant réalisé de 70 à 120° C, la forme de chaque morceau étant au moins une forme parmi :
1) un cube de 5 à 10 mm de côté ;
2) un fragment de 5 à 10 mm de côté ; et
3) une tranche de 5 à 10 mm de côté et de 5 mm d'épaisseur ou moins, et le chauffage étant réalisé dans un four à microondes.

2. Produit moulé à base de fruits secs selon la revendication 1, dans lequel le fruit sec est au moins un élément choisi dans le groupe consistant en raisins, ananas, pommes, mangues, papayes, bananes, melons, écorce d'orange, écorce de citron, abricots, kumquats, pêches, figues, fraises, myrtilles, canneberges, cerises et prunes.

3. Produit moulé à base de fruits secs selon la revendication 1, qui contient en outre au moins un élément choisi dans le groupe consistant en légumes, fruits, amidons, protéines, huiles et matières grasses comestibles, fibres alimentaires, vitamines, sels minéraux, agents acidulants et aromatisants.

4. Produit moulé à base de fruits secs selon la revendication 1, qui se présente sous la forme d'un bloc, d'une feuille ou d'un bâtonnet.
